# NEW EUROPEAN PATENT SPECIFICATION

(11) **EP 1 120 451 B2**
(45) Date of publication and mention of the opposition decision: **13.02.2008**
(45) Mention of the grant of the patent: 07.01.2004
(21) Application number: 01300385.0
(22) Date of filing: 17.01.2001
(51) Int. Cl.: C09K 3/00, C09D 7/00, C10M 173/02, A61K 8/72, A61Q 5/02, A61Q 19/10, A61Q 1/00, A61Q 11/00, C11D 3/37

(54) **Thickener for aqueous systems**
Verdickungsmittel für wässriger Systeme
Agent épaississant systèmes aqueux

(30) Priority: 28.01.2000 EP 00400232
(43) Date of publication of application: 01.08.2001
(73) Proprietor: ROHM AND HAAS COMPANY, Philadelphia, Pennsylvania 19106-2399 (US)
(72) Inventor: Reeve, Paul Frances David, 06560 Valbonne (FR)
(74) Representative: Kent, Venetia Katherine

(56) References cited:
- EP-A- 0 216 416
- EP-A- 0 595 590
- EP-A- 0 966 955
- EP-A- 1 013 264
- EP-A- 1 090 631
- WO-A-00/21493
- WO-A-98/00494
- WO-A-99/00470
- US-A- 4 429 097
- US-A- 4 842 757
- US-A- 5 057 241
- US-A- 5 648 326
- US-A- 5 889 092
- US-A- 5 916 967
- Surfactants and interfacial phenomena, Milton J. Rosen, Wiley
- Journal of Colloid and Interfacial Science, 1989, vol. 198, pages 249-260
- Polymers in aqueous media, Sau & Landoll, Advances in Chemistry Series N223, J.E.Glass Editor, pages 343-364
- Polymers in aqueous media, Sau & Landoll, Advances in Chemistry Series N223, J.E.Glass Editor, Chapt. 8, 17, 18
- Kirk-Othmer Encyclopaedia of Chemical Technology, 1997, "Surfactants", section 3 "Nonionic Surfactants" by Jess L. Lynn & Barbara H. Bory
- Kirk-Othmer Encyclopaedia of Chemical Technology, 2003, "Emulsion", section 2 "Preparation" by E.Kostansek
- Carbopol Aqua 30 datasheet, 1998
- BF Goodrich presentation on Carbopol Aqua 30, 1999
- McCutcheon's Emulsifiers and Detergents, Int. Ed., 1985

## Description

This invention relates to thickeners for aqueous systems. More particularly, the invention relates to hydrophobically modified thickeners and to their use in thickening aqueous systems.

There is a wide variety of commercial or industrial products in the form of thickened aqueous systems. Examples of such products are domestic or personal care products, such as detergents, shampoos, liquid soaps or cosmetic fluids, dentifrices, domestic or industrial liquid cleaners, metal working fluids, latex paints or other coating materials. It is an object of the invention to provide new or improved thickening systems for such products or for aqueous liquid for inclusion in such products or for other uses.

A class of compound which may be used as thickeners for aqueous systems comprises a lipophilically modified copolymer containing a hydrophilic chain. Such a thickener contains one or more hydrophilic chains, for example a polyoxyethylene chain, with or without other chain portions, and one or more lipophilic chains, for example a long chain alkyl chain. One class of copolymer thickener is an aqueous emulsion thickener comprising one or more ethylenically unsaturated monomeric components, for example a carboxylic acid monomer and/or a nonionic vinyl monomer together with one or more nonionic vinyl polyoxyethylene components containing one or more lipophilic portions. References to the emulsion copolymeric thickener hereafter also include a reference to any solution form of such thickener which may be entered on pH adjustment, as may be appropriate from the context. The present invention will be described hereafter with particular reference to copolymeric thickeners comprising two vinyl monomers and a lipophilically modified hydrophilic chain but it is understood that this is by way of example and that the concept of the present invention extends to other lipophilically modified copolymer thickeners containing a hydrophilic chain.

US Patent No. 4,384,096 describes aqueous emulsion copolymers which are pH responsive thickeners for aqueous systems. These copolymers comprise three components, namely a carboxylic acid monomer, a nonionic vinyl monomer and a nonionic vinyl surfactant ester which is a monoester containing a hydrophilic chain containing repeating ethylene oxide units and a lipophilic C₈-C₂₀ alkyl or C₈-C₁₆ alkylphenyl chain. The copolymer is stable as a colloidal dispersion at a pH lower than about 5.0 but becomes an effective thickener for aqueous systems on adjustment to a pH of about 5.5-10.5 or higher. It is noted in this document that, for a given polyethyleneoxide content in the lipophilically modified vinyl surfactant ester, increasing the chain length of the terminal hydrophobic alkoxy or alkylphenoxy group in the surfactant ester will increase the efficiency of the resulting polymer as a thickener.

US Patents Nos. 4,663,385 and 4,429,097 describe broadly similar copolymeric thickening agents but in which the lipophilically modified nonionic vinyl surfactant ester is a diester which can contain up to two terminal C₈ to C₃₀ groups or is a triester which can contain up to three terminal C₈ to C₃₀ groups.

US Patent No. 4,514,552 describes a further copolymeric thickening agent comprising an α,β-monoethylenically unsaturated carboxylic acid, a monoethylenically unsaturated monomer lacking surfactant capacity, a nonionic urethane monomer which is the urethane reaction product of a monohydric nonionic surfactant with a monoethylenically unsaturated monoisocyanate. The monohydric nonionic surfactant is an ethoxylated hydrophobe containing adducted ethylene oxide to provide the hydrophilic portion of the molecule and a C₆ to C₂₂ alkyl group to provide the hydrophobic portion thereof. The thickener acts by increasing in viscosity on neutralisation.

The present invention relates to thickeners for aqueous systems, the thickeners containing a high proportion, for example more than 2% and up to even 50% or 60% or more by weight of the thickened system, of one or more separate hydrophilic surfactants. It is found that in such systems lipophilically modified thickeners containing a hydrophilic chain, for example as described in the art referred to above, do not give their normal thickening behavior and, in fact, may even, in some instances at least, give a greatly decreased thickening effect with increased lipophilic chain length. This is corroborated in relation to certain copolymeric emulsion thickeners by the disclosures in US Patents Nos. 4,663,385 and 4,429,097. In those patents it is initially noted that the presence of a separate additional surfactant may give an enhancement of the thickening effect but that an optimum level of additional surfactant is reached followed by a decrease as the surfactant level is further increased. The data included in these patents show that a progressive improvement in the viscosity of an aqueous liquid is obtained when increasing amounts from 0.025 to 0.15%, by weight of the copolymer thickener, of a particular additional anionic surfactant are used but that there is thereafter a progressive decrease in viscosity. The viscosity becomes even lower than when no additional surfactant had been added at surfactant levels of 0.40% and above. At a level of the added surfactant of 0.50% by weight of the copolymer thickener the viscosity obtained was greatly reduced in comparison with a liquid thickened only by the copolymer, with no added surfactant.

EP-A-0 966 955, WO-A-9 900 470 and EP-A-0 595 590 disclose aqueous compositions comprising lipophilically modified copolymers and surfactants. None disclose surfactants with HLB values greater than 20.

US Patent No. 5,916,967 describes the use of a combination of two surfactants of differing HLB values, as defined in that patent, together with a thickener to give an enhanced thickening effect. The surfactants are to have a weighted average HLB value of 15 or less. The patent teaches that "for weighted average HLB values greater than about 15, the enhanced thickening effect is believed to be negligible because the overall hydrophilicity of the surfactant combination nullifies any significant hydrophobic interaction between the surfactants and the associative thickener .." It is also seen from the Examples in the patent that, in the case of a thickening system containing one surfactant having a HLB value of 13.5, or containing a combination of surfactants having a weighted average HLB value of 13.5, the viscosity obtained was extremely low. In contrast, the present invention, described below, essentially relates to the thickening of systems not only containing a high content of hydrophilic surfactant but also containing surfactants having a high HLB value above that taught in US Patent No. 5,916,967. Reference is made to disclosures of methods for calculating the HLB value of a surfactant in "Surfactants and Interfacial Phenomena", Milton J. Rosen, J.Wiley & Son, NY, (1978) page 244 and in "Interfacial Phenomena" J.T.Davies et al., Academic Press, Ed.2, (1963), pages 373-383.

The associative thickener used in US Patent No. 5,916,967 may be a hydrophobically modified alkali-soluble emulsion copolymer, although the use of that thickener is not actually exemplified. The monomer components include a (meth)acrylic acid ester of an alkoxylated hydrocarbyl or complex hydrophobe alcohol in from 1 to 30%, preferably 0.5 to 25%, of the monomer content of the copolymer. According to the present invention, described below, not only is the chain length of the hydrophobe of importance but also its quantity, that is the quantity of the lipophilically modified component. If that quantity is not above 5% by weight of the copolymer, or even to an extent 10%, for example, suitably at least 15%, there is a tendency to inefficiency in the thickening effect.

### STATEMENT OF INVENTION

According to one aspect the present invention provides an aqueous composition comprising a lipophilically modified copolymer thickener containing a hydrophilic chain and also comprising a surfactant, the composition being characterised by the combination of features (a) that the surfactant is a hydrophilic surfactant or surfactants having a HLB value, or a weighted average HLB value greater than 20, for example at least 25, which surfactant is present in greater than 2%, preferably greater than 10%, for example at least 15%, on a solids basis, by weight of the aqueous composition, and (b) that the copolymer contains at least one lipophilically modified component in a quantity of greater than 5%, preferably greater than 10%, by weight of the components of the copolymer and wherein the copolymer is crosslinked and has been subjected to a chain transfer reaction.

### DETAILED DESCRIPTION

The hydrophilic surfactant is preferably selected from the groups of anionic surfactants characterised by carboxylate, sulphonate, sulphate or phosphate solubilising groups, and nonionic surfactants characterised by amide or hydroxyl groups or ethylene oxide chains. Hydrophilic cationic, amphoteric or zwitterionic surfactants may also or alternatively be used provided that they are compatible with the thickening polymer and other ingredients of the. aqueous system in the quantity required by the invention. Cationic surfactants characterised by amine or ammonium solubilising groups, and/or amphoteric surfactants characterised by combinations of the anionic and cationic solubilising groups may be selected.

Preferred hydrophilic surfactants for use in the practice of the invention may be selected from the C₈ to C₁₈ fatty acids or their water soluble salts, water soluble sulphates of C₈ to C₁₈ alcohols, sulphonated alkylaryl compounds such as, for example, dodecylbenzene sulphonate, alkylphenoxy polyethoxy ethanols, for example with C₇ to C₁₈ alkyl groups and 9 to 40 or more oxyethylene units, ethylene oxide derivatives of long chain carboxylic acids, for example of lauric, myristic, palmitic or oleic acids, ethylene oxide derivatives of long chain alcohols, for example of lauryl or cetyl alcohols, alkanolamides and polyglucosides, for example the alkyl polyglucosides. Suitable cationic hydrophilic surfactants may be, for example, lauryl pyridinium chloride, octylbenzyltrimethyl-ammonium chloride, dodecyl trimethylammonium chloride and ethylene oxide condensates of primary fatty acid amines.

The lipophilically modified component or components of the copolymer used according to the invention may contain either one, or a plurality of, lipophilic groups. According to one embodiment, such groups are suitably in the same copolymer component as and attached to hydrophilic chains, such as for example polyoxyethylene chains. According to another embodiment, the lipophilically modified polymer may contain a vinyl group which may be used to copolymerise the polymer to other vinyl-containing entities to alter or improve the properties of the polymer. Alternatively other copolymerisation systems may be used. The polymerisable group may be attached to the lipophilic group directly, or indirectly for example via one or more, for example up to 60, preferably up to 40, -CH[R]CH₂O- groups wherein R is C₁ or C₂ alkyl. Alternatively, the polymerisable group may be attached to the lipophilic group by reaction of the hydrophilic, for example polyoxyethylene, component with a urethane compound containing unsaturation. The molecular weight of the lipophilic modifying group or groups is preferably selected together with the number of such groups to give the required minimum lipophilic content in the copolymer, and preferably, for satisfactory performance in a wide range of systems, at least 10%, very suitably at least 18%, for example at least 30%, and possibly up to 50% or more by weight of the components of the copolymer.

The lipophilic modifying groups themselves are preferably straight chain saturated alkyl groups, but may be aralkyl or alkyl carbocyclic groups such as alkylphenyl groups, having at least 6; and up to 30 carbon atoms although branched chain groups may be contemplated. It is understood that the alkyl groups may be either of synthetic or of natural origin and, in the latter case particularly, may contain a range of chain lengths. For example, naturally sourced stearic acid, even of commercially pure quality may contain only about 90% of stearic chains, up to about 7% of palmitic chains and a proportion of other chains and lower quality products may contain substantially less stearic acid. It is intended herein that reference to the chain length of such groups is to the predominant chain length which is present as more than 50%, preferably in more than 75%, of the chains. It is an important subsidiary feature of the invention that the chain length of the lipophilic groups be minimised and the chain length, or predominant chain length, is preferably below 22, more preferably not more than 18, for example, very suitably, below 16 carbon atoms. It is found that the use of shorter alkyl chains gives more efficient thickening although this may not apply to very short alkyl chains which are preferably at least 8 carbon atoms and more preferably at least 10 carbon atoms. The hydrophilic component of the copolymer may suitably be a polyoxyethylene component preferably comprising at least one chain of at least 2, preferably at least 5, and up to 60, preferably up to 40, ethylene oxide units. Such components are usually produced in a mixture of chain lengths.

In the practice of the invention the lipophilically modified component is preferably attached directly of indirectly to a vinyl ester or to a mono-unsaturated urethane compound. However, the invention applies to aqueous emulsion copolymeric pH responsive thickeners in which those or other unsaturated groups are attached to the lipophilic component so as to enable it to be polymerised into the copolymer.

The ethylenically unsaturated carboxylic acid monomer component of the copolymer, if present, may suitably be at least one mono-, di- or poly-carboxylic acid containing from 3 to 8 carbon atoms for example, acrylic acid, methacrylic acid, itaconic acid, acryloxypropionic acid, maleic acid, fumaric acid, citraconic acid or crotonic acid, and/or half- or part-esters of the di- or polycarboxylic acids with lower alkanols such as, for example, alkanols containing 1 to 4 carbon atoms preferably methacrylic acid, acrylic acid itaconic acid or acryloxypropionic acid. This monomer may suitably be present in at least 10%, preferably at least 20%, and up to at least 60%, preferably up to 55%, by weight of the copolymer.

The nonionic vinyl monomer component of the copolymer, if present, may suitably be at least one compound of the general formula:

H₂C=CYZ

wherein:
(a) Y is H and Z is -COOR", -C₆H₄R, -CN, -Cl, -OC(O)R"", -CONH₂ or -CH=CH₂; or
(b) Y is C₁-C₄ alkyl and Z is -COOR", -C₆H₄R"', -CN, -CONH₂ or -CH=CH₂; or
(c) Y and Z are -Cl;
   with:
   R" being C₁-C₈ alkyl, C₂-C₈ hydroxyalkyl or lower alkoxy (C₂-C₈) alkyl;
   R"' being -H, -Cl, -Br or C₁-C₄ alkyl; and
   R"" being C₁-C₈ alkyl.

The nonionic vinyl monomer is preferably a C₁-C₄ alkyl acrylate or methacrylate such as ethyl acrylate, butyl acrylate or methyl methacrylate. This monomer may suitably be present in at least 15%, preferably at least 25% and in up to 80%, preferably up to 60%, by weight of the copolymer.

A pH responsive copolymer thickener system may be prepared by copolymerising the monomers using known aqueous or inverse emulsification procedures at an acidic pH and any other suitable additives known in the art such as, for example, a free-radical initiator such as a peroxygen compound. Suitable peroxygen compounds may be peroxides, hydroperoxides, persulphates or organic peroxides and a suitable quantity of initiator may be 0.01% to 3% by weight of the components of the copolymer. The copolymerisation temperature may suitable be about 60°C to 90°C. The copolymer emulsion may be recovered by filtration and the copolymer may, if desired, be provided in dry form by spray, drum or other drying. US Patent Nos. 4,384,096, 4,663,385, 4,429,097 and 4,514,552 may be consulted for further general and specific details of suitable copolymerisation and recovery techniques, and of suitable monomers and additives. The molecular weight of the copolymer is suitably in the range of about 100,000 to 1 million.

According to the invention a cross-linking agent, such as a monomer having two or more ethylenic unsaturations, is included with the copolymer components. Examples of such monomers are diallyl phthalate, divinyl benzene, allyl methacrylate, diacrylobutylene or ethylene glycol dimethacrylate. A suitable quantity of a cross-linking agent is 0.05% to 1% by solids weight on the copolymer components. It is a further feature of the invention that there is used, in conjunction with the cross-linking agent, a chain transfer agent. Examples of suitable chain transfer agents are carbon tetrachloride, bromoform, bromotrichloromethane, long chain alkyl mercaptans and thioesters such as dodecyl-, octyl-, tetradecyl- or hexadecyl-mercaptans or butyl-, isooctyl- or dodecyl-thioglycolates. A suitable quantity of chain transfer agent is 0.1% to 10%, preferably 0.1 to 2%, by solids weight of the copolymer components. The cross-linking agent has been found to reduce thickening performance, which was unexpected. However, if the cross-linking agent is used in conjunction with a chain transfer agent, which are conflicting operations from the point of polymerisation, not only is exceptional efficiency observed but also very high compatibility with hydrophilic surfactants as manifested by increased product clarity.

The lipophilically modified hydrophilic polymer may be utilised in a variety of ways to provide the thickener or thickened composition of the invention. The polymer, in aqueous dispersion or in the dry form, may be blended into an aqueous system to be thickened followed, in the case of a pH responsive thickener, by a suitable addition of acidic or basic material if required. In the case of the copolymeric pH responsive thickeners described above, the system to be thickened is preferably at, or is brought to, a pH of at least 7, particularly above 7, for example at least 8 and up to 13 or more in some systems. The neutralising agent is preferably a base such as sodium hydroxide or ammonium hydroxide. Alternatively, the copolymer may first be neutralised in aqueous dispersion and then blended. The hydrophilic surfactant essentially present in greater than 2% by weight of the system according to the invention is preferably blended into a dispersion to be thickened separately from the copolymer and the combined dispersion neutralised.

Certain embodiments of the present invention will now be illustrated by reference to the following Examples but without limitation of the scope of the invention thereto. Example 1 is not according to the invention and is present for comparative purposes only. Examples 2 to 4 are not according to the invention and illustrate the use of various hydrophilic surfactant levels, lipophilic group lengths and quantities and copolymer quantities designed to give approximately equal thickening within each Example in non-cross-linked copolymers. Those quantities are therefore a factor relevant to the thickening efficiency of the copolymer. Example 5 illustrates the use of cross-linked copolymers.

In the following Examples the following system was used. Samples were prepared of emulsion copolymers each containing a methacrylic acid monomer, an ethyl acrylate monomer and a nonionic vinyl ester polyoxyethylene component containing a lipophilic portion of synthetic origin consisting of either a C₁₂ (lauryl), a C₁₈ (stearyl) or a C₂₂ (behenyl) saturated alkyl chain and a polyoxyethylene oxide methacrylate chain containing from 15 to 30 ethylene oxide units. In some samples a crosslinking agent or a cross-linking agent and a chain transfer agent, were included. These copolymer samples were used in tests to thicken either water or water containing a hydrophilic surfactant (alkyl benzene sulphonate, calculated HLB value >25) at various levels of copolymer designed to give an approximately equivalent thickening effect within each set of tests, and at various surfactant concentrations. The thickening effect was measured using a Brookfield Viscometer at various rotation speeds from 0.6 to 60 rpm (revolutions per minute) with the results expressed in cPs (centipoise) and as a Pseudoplasticity Index (PS), which is the ratio between the Brookfield 0.6 rpm and 60 rpm viscosity figures. The results of the tests are summarised in the following Tables.

### Example 1 (Absence of surfactant).

**Table 1**

| Composition: | | (a) | (b) | (c) | (d) |
|---|---|---|---|---|---|
| Alkyl chain - no. carbon atoms: | | C₁₂ | C₁₈ | C₂₂ | C₁₈ |
| | | | | | |
| % Lip. modified component on copolymer: | | 10 | 10 | 10 | 25 |
| | | | | | |
| Medium - Water(W) | | W | W | W | W |
| % surfactant: | | 0 | 0 | 0 | 0 |
| | | | | | |
| % by weight copolymer on total system: | | 1.5 | 0.8 | 0.55 | 0.8 |
| | | | | | |

| Test No. | Brookfield Viscosity at stated rpm | | | | |
|---|---|---|---|---|---|
| 1 | 0.6 | 24,000 | 184,000 | 136,000 | 117,000 |
| 2 | 3 | 18,800 | 42,800 | 33,400 | 27,800 |
| 3 | 6 | 15,500 | 22,300 | 17,500 | 14,800 |
| 4 | 12 | 12,000 | 12,050 | 9,200 | 8,200 |
| 5 | 30 | 8,540 | 5,700 | 4,100 | 3,680 |
| 6 | 60 | 6,300 | 2,900 | 2,280 | 2,010 |
| PS Index: | | 5.3 | 63.4 | 59.6 | 58.2 |

The advantage of using a longer chain alkyl group in the absence of a surfactant is evident from the data set out above in that a lower quantity of polymer thickener by weight of the total system was required for equivalent performance. The PS Index was also significantly lower using the C₁₂ alkyl group indicating a low ratio of low-shear/high-shear viscosity. Often, a relatively high low-shear viscosity is desirable.

### Example 2 (5% hydrophilic surfactant)

**Table 2**

| Composition: | | (a) | (b) | (c) | (d) | (e) |
|---|---|---|---|---|---|---|
| Alkyl chain - no. carbon atoms: | | C₁₂ | C₁₈ | C₂₂ | C₁₈ | C₁₈ |
| | | | | | | |
| % Lip. modified component on copolymer: | | 10 | 10 | 10 | 18 | 25 |
| | | | | | | |
| Medium - Water(W) % surfactant: | | 5 | 5 | 5 | 5 | 5 |
| | | | | | | |
| % by weight copolymer on total system: | | 1.75 | 1.15 | 1.3 | 0.8 | 0.8 |
| | | | | | | |

| Test No. | Brookfield Viscosity at stated rpm | | | | | |
|---|---|---|---|---|---|---|
| 7 | 0.6 | 20,000 | 22,000 | 19,000 | 11,000 | 21,000 |
| 8 | 3 | 13,400 | 14,000 | 13,600 | 11,200 | 18,400 |
| 9 | 6 | 11,700 | 12,700 | 12,900 | 10,200 | 15,700 |
| 10 | 12 | 9,800 | 11,050 | 11,800 | 8,350 | 11,400 |
| 11 | 30 | 8,280 | 8,420 | 7,400 | 4,920 | 5,320 |
| 12 | 60 | 7,490 | 4,960 | 3,990 | 2,670 | 2,760 |
| PS Index: | | 2.7 | 4.4 | 4.9 | 4.1 | 7.6 |

The efficiency of the thickening copolymer, in terms of the quantity required to achieve a given viscosity, is found to be reduced overall in the presence of 5% by weight of the surfactant and the C₂₂ alkyl group is no longer the most efficient. The PS Index is of similar magnitude in all cases.

### Example 3 (10% hydrophilic surfactant)

**Table 3**

| Composition: | | (a) | (b) | (c) | (d) | (e) |
|---|---|---|---|---|---|---|
| Alkyl chain - no. carbon atoms: | | C₁₂ | C₁₈ | C₂₂ | C₁₈ | C₁₈ |
| | | | | | | |
| % Lip. modified component on copolymer: | | 10 | 10 | 10 | 18 | 25 |
| | | | | | | |
| Medium - Water(W) % surfactant: | | 10 | 10 | 10 | 10 | 10 |
| | | | | | | |
| % by weight copolymer on total system: | | 1.5 | 1.5 | 1.75 | 1.2 | 1.05 |
| | | | | | | |

| Test No. | Brookfield Viscosity at stated rpm | | | | | |
|---|---|---|---|---|---|---|
| 13 | 0.6 | 13,000 | 16,000 | 11,000 | 24,000 | 16,000 |
| 14 | 3 | 11,800 | 14,400 | 9,800 | 17,600 | 12,800 |
| 15 | 6 | 10,300 | 12,400 | 9,200 | 15,100 | 1,100 |
| 16 | 12 | 8,650 | 10,100 | 7,950 | 12,950 | 9,700 |
| 17 | 30 | 7,240 | 8,520 | 6,970 | 10,900 | 8,400 |
| 18 | 60 | 6,270 | 7,570 | 6,170 | 9,730 | 7,730 |
| PS Index: | | 2.1 | 2.1 | 1.8 | 2.5 | 2.1 |

The C₂₂ alkyl chain containing thickener was used in a larger quantity than the C₁₂ and C₁₈ thickeners but still gave a lower viscosity. The C₁₂ and C₁₈ thickeners gave a higher PS Index.

### Example 4 (15% hydrophilic surfactant)

**Table 4**

| Composition: | | (a) | (b) | (c) | (d) | (e) |
|---|---|---|---|---|---|---|
| Alkyl chain - no. carbon atoms: | | C₁₂ | C₁₈ | C₂₂ | C₁₈ | C₁₈ |
| | | | | | | |
| % Lip. modified component on copolymer: | | 10 | 10 | 10 | 18 | 25 |
| | | | | | | |
| Medium - Water(W) % surfactant: | | 15 | 15 | 15 | 15 | 15 |
| | | | | | | |
| % by weight copolymer on total system: | | 1.35 | 1.35 | 1.6 | 0.9 | 0.9 |
| | | | | | | |

| Test No. | Brookfield Viscosity at stated rpm | | | | | |
|---|---|---|---|---|---|---|
| 19 | 0.6 | 17,000 | 14,000 | 14,000 | 14,000 | 15,000 |
| 20 | 3 | 13,400 | 11,600 | 14,400 | 11,000 | 15,000 |
| 21 | 6 | 11,500 | 10,200 | 12,600 | 10,200 | 13,800 |
| 22 | 12 | 9,700 | 8,650 | 10,850 | 9,150 | 11,950 |
| 23 | 30 | 8,080 | 7,380 | 9,040 | 7,800 | 10,150 |
| 24 | 60 | 6,910 | 6,310 | 7,900 | 7,040 | 9,010 |
| PS Index : | | 2.5 | 2.2 | 1.8 | 2.0 | 1.7 |

At the higher surfactant concentrations illustrated in Tables 3 and 4 both the C₁₂ and the C₁₈ alkyl groups outperform the C₂₂ group and in Table 4 the C₁₂ group is shown to be the more efficient. In all of the Tables one or more series of tests are included using an increased concentration of the C₁₈ alkyl group in the polymer. In the absence of surfactant there appears to be a disadvantage in increasing the concentration of the alkyl group to 25%. In the presence of only 5% of surfactant a lower quantity of copolymer gives slightly reduced viscosities in most tests and no substantial advantage is seen in using the increased quantities of alkyl groups. In the presence of over 5%, for example 10% or 15%, of surfactant the advantage of using over 10%, for example 18 or 25%, of the alkyl group is clear.

### Example 5 (15% hydrophilic surfactant/copolymer crosslinking)

**Table 5**

| Composition: | | (a) | (b) |
|---|---|---|---|
| Alkyl chain - | | | |
| no. carbon atoms: | | C₁₈ | C₁₈ |
| % Lip. modified | | | |
| component on copolymer: | | 30 | 30 |
| Crosslinking agent used: | | yes | yes |
| Chain transfer agent used: | | no | yes |
| Medium - Water(W) | | | |
| % surfactant: | | 15 | 15 |
| % by weight copolymer | | | |
| on total system: | | 1.15 | 0.85 |
| Test | Brookfield Viscosity | | |
| No. | at stated rpm | | |
| 25(a)-(b) | 0.6 | 16,000 | 10,000 |
| 26(a)-(b) | 3 | 12,400 | 10,600 |
| 27(a)-(b) | 6 | 10,900 | 10,300 |
| 28(a)-(b) | 12 | 9,950 | 9,100 |
| 29(a)-(b) | 30 | 8,700 | 8,080 |
| 30(a)-(b) | 60 | 7,860 | 7,200 |
| PS Index: | | 2.0 | 1.4 |

The crosslinking agent was diallyl phthalate and the chain transfer agent was dodecyl mercaptan. Samples of thickener solutions containing increasing amounts of the above C₁₈ alkyl containing components and in each case 15% of the hydrophilic surfactant were tested for clarity by measuring their Optical Density at 545 nm (nanometers) using a spectrophotometer. The instrument was zeroed on a 15% surfactant solution containing no copolymer. The results are set out in Table 6.

### Example 6 (cross-linking/chain transfer)

**Table 6**

| % Lip. Mod. component | Copolymer cross-linked | Chain transfer agent used | Optical density |
|---|---|---|---|
| 10% | No | No | 0.129 |
| 18% | " | " | 0.197 |
| 25% | " | " | 0.093 |
| 30% | Yes | " | 0.144 |
| 30% | " | Yes | 0.011* |

| | | | |
|---|---|---|---|
| * exceptional clarity as well as good efficiency. | | | |

## Claims

1. An aqueous composition comprising:
(a) a lipophilically modified copolymer thickener comprising (i) a hydrophilic chain and (ii) one or more lipophilically modified component in a quantity greater than 5%, based on weight of components of the copolymer and wherein the copolymer thickener is cross-linked and has been subjected to a chain transfer reaction; and
(b) one or more hydrophilic surfactant wherein the surfactant has an HLB value, or a weighted average HLB value, greater than 20 and wherein the surfactant is present in a quantity greater than 2%, based on weight of the aqueous composition.

2. The composition as claimed in claim 1 wherein the one or more hydrophilic surfactant is present in a quantity greater than 10%.

3. The composition as claimed in claim 1 wherein the one or more hydrophilic surfactant has an HLB value, or weighted HLB value, of at least 25.

4. The composition as claimed in claim 1 wherein the copolymer thickener comprises at least 10% by weight of lipophilically modified component.

5. The composition as claimed in claim 1 wherein the lipophilically modified component comprises one or more alkyl group containing from 10 to 18 carbon atoms.

6. The composition as claimed in claim 1 wherein the lipophilically modified component contains a hydrophilic chain.

7. The composition as claimed in claim 6 wherein the hydrophilic chain is a polyoxyethylene chain.

8. The composition as claimed in claim 1 wherein the copolymer thickener comprises a reaction product of one or more ethylenically mono-unsaturated monomer and the lipophilically modified component.

9. The composition as claimed in claim 1 wherein the lipophilically modified component comprises a copolymerisable vinyl ester or monoethylenically unsaturated urethane.

10. The composition as claimed in claim 1 wherein the copolymer thickener is a pH responsive thickener.

11. A thickened composition comprising the composition as claimed in claim 1.

12. The thickened composition as claimed in claim 11 selected from the group consisting of domestic products, personal care products, detergents, shampoos, liquid soaps, cosmetic fluids, dentifrices, domestic liquid cleaners, industrial liquid cleaners, metal working fluids, latex paints and acrylic paints.

## Patentansprüche

1. Wäßrige Zusammensetzung, umfassend:
(a) ein lipophil modifiziertes Copolymer-Verdickungsmittel, umfassend
(i) eine hydrophile Kette und
(ii) eine oder mehrere lipophil modifizierte Komponenten in einer Menge von größer als 5%, bezogen auf das Gewicht der Komponenten des Copolymers, und wobei das Copolymer-Verdickungsmittel vernetzt ist und einer Kettentransferreaktion unterworfen worden ist, und
(b) ein oder mehrere hydrophile grenzflächenaktive Mittel, wobei das grenzflächenaktive Mittel einen HLB-Wert oder einen gewichtsgemittelten bzw. gewichteten durchschnittlichen HLB-Wert von größer als 20 aufweist, und wobei das grenzflächenaktive Mittel in einer Menge von größer als 2%, bezogen auf das Gewicht der wäßrigen Zusammensetzung, vorhanden ist.

2. Zusammensetzung nach Anspruch 1, wobei das eine oder die mehreren hydrophilen grenzflächenaktiven Mittel in einer Menge von größer als 10% vorhanden sind.

3. Zusammensetzung nach Anspruch 1, wobei das eine oder die mehreren hydrophilen grenzflächenaktiven Mittel einen HLB-Wert oder gewichteten HLB-Wert von mindestens 25 aufweisen.

4. Zusammensetzung nach Anspruch 1, wobei das Copolymer-Verdickungsmittel mindestens 10 Gew.-% einer lipophil modifizierten Komponente umfaßt.

5. Zusammensetzung nach Anspruch 1, wobei die lipophil modifizierte Komponente eine oder mehrere Alkylgruppen, enthaltend von 10 bis 18 Kohlenstoffatome, umfaßt.

6. Zusammensetzung nach Anspruch 1, wobei die lipophil modifizierte Komponente eine hydrophile Kette enthält.

7. Zusammensetzung nach Anspruch 6, wobei die hydrophile Kette eine Polyoxyethylenkette ist.

8. Zusammensetzung nach Anspruch 1, wobei das Copolymer-Verdickungsmittel ein Reaktionsprodukt eines oder mehrerer ethylenisch einfach ungesättigter Monomere und der lipophil modifizierten Komponente umfaßt.

9. Zusammensetzung nach Anspruch 1, wobei die lipophil modifizierte Komponente einen copolymerisierbaren Vinylester oder ein monoethylenisch ungesättigtes Urethan umfaßt.

10. Zusammensetzung nach Anspruch 1, wobei das Copolymer-Verdickungsmittel ein pH-ansprechendes Verdickungsmittel ist.

11. Verdickte Zusammensetzung, umfassend die Zusammensetzung nach Anspruch 1.

12. Verdickte Zusammensetzung nach Anspruch 11, ausgewählt aus der Gruppe, bestehend aus Haushaltsprodukten, Körperpflegeprodukten, Waschmitteln bzw. Detergenzien, Shampoos, Flüssigseifen, kosmetischen Flüssigkeiten, Zahnputzmitteln, flüssigen Haushaltsreinigungsmitteln, industriellen Flüssigreinigungsmitteln, Metallbearbeitungsflüssigkeiten, Latexanstrichen und Acrylanstrichen.

## Revendications

1. Composition aqueuse comprenant :
(a) un épaississant copolymère modifié pour être rendu lipophile, comprenant (i) une chaîne hydrophile et (ii) un ou plusieurs composants modifiés pour être rendus lipophiles, en une quantité supérieure à 5 %, basée sur le poids des composants du copolymère, et dans laquelle l'épaississant copolymère est réticulé et soumis à une réaction de transfert de chaîne, et
(b) un ou plusieurs tensioactifs hydrophiles, où le ou les tensioactifs possèdent une valeur de HLB, ou une valeur moyenne pondérée de HLB, supérieure à 20 et où le ou les tensioactifs sont présents en une quantité supérieure à 2 %, basée sur le poids de la composition aqueuse.

2. Composition telle que revendiquée dans la revendication 1, dans laquelle le ou les tensioactifs hydrophiles sont présents en une quantité supérieure à 10 %.

3. Composition telle que revendiquée dans la revendication 1, dans laquelle le ou les tensioactifs hydrophiles possèdent une valeur de HLB, ou une valeur pondérée de HLB, d'au moins 25.

4. Composition telle que revendiquée dans la revendication 1, dans laquelle l'épaississant copolymère comprend au moins 10 % en poids de composant modifié pour être rendu lipophile.

5. Composition telle que revendiquée dans la revendication 1, dans laquelle le composant modifié pour être rendu lipophile comprend un ou plusieurs groupes alkyle contenant 10 à 18 atomes de carbone.

6. Composition telle que revendiquée dans la revendication 1, dans laquelle le composant modifié pour être rendu lipophile contient une chaîne hydrophile.

7. Composition telle que revendiquée dans la revendication 6, dans laquelle la chaîne hydrophile est une chaîne de polyoxyéthylène.

8. Composition telle que revendiquée dans la revendication 1, dans laquelle l'épaississant copolymère comprend un produit de réaction d'un ou plusieurs monomères monoinsaturés à insaturation éthylénique et du composant modifié pour être rendu lipophile.

9. Composition telle que revendiquée dans la revendication 1, dans laquelle le composant modifié pour être rendu lipophile comprend un ester vinylique ou uréthane à insaturation monoéthylénique copolymérisable.

10. Composition telle que revendiquée dans la revendication 1, dans laquelle l'épaississant copolymère est un épaississant sensible au pH.

11. Composition épaissie comprenant la composition telle que revendiquée dans la revendication 1.

12. Composition épaissie telle que revendiquée dans la revendication 11, choisie dans le groupe constitué par les produits domestiques, les produits de soin corporel, les détergents, les shampoings, les savons liquides, les fluides cosmétiques, les dentifrices, les nettoyants liquides domestiques, les nettoyants liquides industriels, les fluides de transformation des métaux, les peintures au latex et les peintures acryliques.
